# EUROPEAN PATENT APPLICATION

(11) **EP 4 657 340 A1**
(43) Date of publication of application: **03.12.2025**
(21) Application number: 24386150.7
(22) Date of filing: 20.12.2024
(51) Int. Cl.: G06Q 10/02, G06Q 30/0207, G06Q 50/06, G06Q 50/12

(54) **SYSTEM AND METHOD FOR CALCULATING THE ENERGY FOOTPRINT OF A HOTEL UNIT DEPENDING ON THE CHOICES OF THE GUEST**

(30) Priority: 31.05.2024 GR 20240100406
(71) Applicant: Angelidis, Thomas, 11521 Athens (Attica) (GR)
(72) Inventor: Angelidis, Thomas, 11521 Athens (Attica) (GR)
(74) Representative: Tsipouridi- Paraskevopoulou, Sofia

(57) **Abstract**

This invention relates to the creation of a digital platform for hotel room bookings that offers an innovative approach to the booking process. The user starts with a basic room without many amenities and then selects the amenities that they wish to accompany their stay. This platform offers the possibility to quantify the environmental footprint of the user's choices in CO2 equivalents in kilograms. It therefore encourages users to actively reduce their environmental footprint when booking hotels and rewards them through a rewards program. What is innovative, however, is that this initiative does not only come from users, but also from the hotels themselves. In this way, hotels encourage customers to make sustainable choices and to make the choices that will make their accommodation more sustainable.

## Description

The invention relates to a platform for calculating the environmental footprint of booking a room and limiting the environmental footprint through a reservation personalization system.

Accommodation booking platforms are already in existence, but they provide little information to customers about the environmental footprint of their booking (e.g., there is only a general indication that an accommodation is environmentally friendly), and do not provide the user with the possibility of a fully personalized booking.

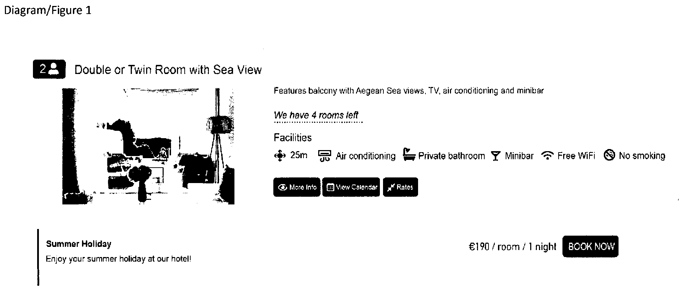

The existing accommodation booking platforms have some basic default options per accommodation type as shown in Figure 1. These options differ in terms of the amenities of each accommodation and correspond to different monetary values. To give a basic example with 4 options, a guest has to choose between a single/double room with/without a view and these options will usually correspond to 4 different values. Therefore, under the current regime, the user either has no choice in terms of the facilities of their accommodation or has to choose between a small and restrictive range of options. But the main issue with the existing regime on the platforms is that the environmental impact of the user's stay is not taken into account and the user is not incentivised to choose the criteria that will have the most sustainable impact on the environment.

The advantage of the invention is that the user has full control over his/her environmental footprint through the personalisation of the platform. This is achieved as the user can progressively select the additional amenities of their room and be informed of the environmental footprint for each of their choices outside the very basic pre-existing package. Thus, for the first time, an accommodation booking platform gives full information on the environmental impact of their stay to users in order to encourage them to reduce their environmental footprint during their stay.

This encouragement will also be implemented by a system of rewarding platform members for making sustainable choices over unsustainable ones. Platform members will have offers (room upgrades, free breakfast, etc.) for future bookings if they achieve a predefined number of CO2 kilogram reductions in their previous bookings through the platform. In addition, the incentive to reduce the environmental footprint will be achieved in another way: the data collected from users' choices will form the basis for regular data analytics reports that will be sent to the hotels and to users enrolled in the platform's loyalty program.

Concluding with the technical implementation that will make tourist accommodation more sustainable, the platform communicates with sensors connected to the hotel's devices, which give access to data that is analysed and provides solutions to optimise energy use in the hotel sector. This changes the existing dynamics in the global hotel industry, as through this innovative platform users encourage tourist accommodations to become sustainable, indirectly (through the reward system and data analysis reports) influencing their decision-making process. For their part, accommodation establishments encourage users (through a more advantageous financial offer) to make accommodation choices that will make them more sustainable.

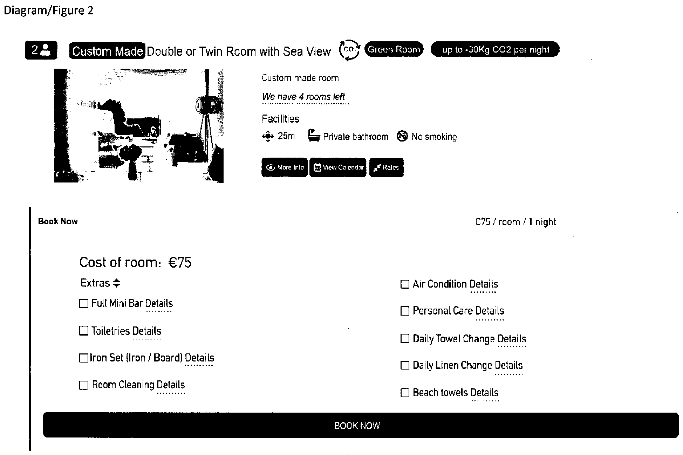

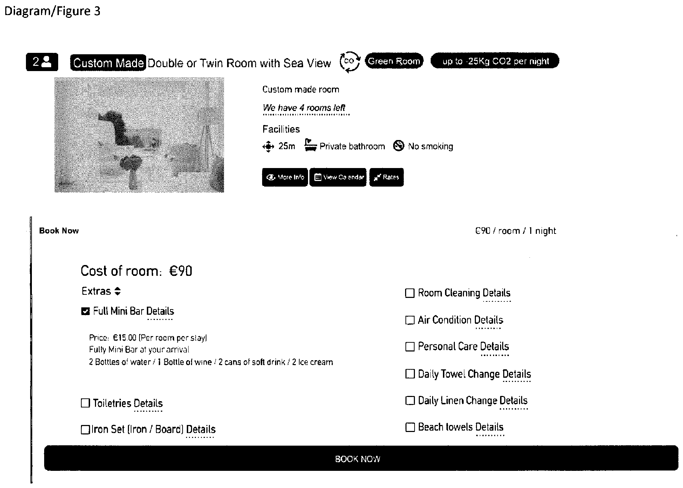

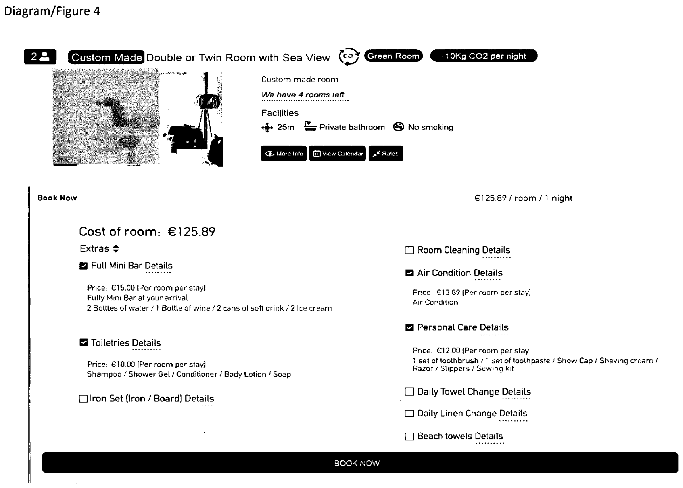

According to the present invention, the platform has the ability to allow the user to choose the amenities they want to have in their accommodation as well as to choose the services they want to be provided with by the hotel managers. This is illustrated graphically in Figures 2-4 where screen shots (print screen) of the platform are shown when selecting a personalized reservation. More specifically, the user is able to choose from a range of accommodations and services defined by the hotelier that are at the discretion of the user if desired for the stay. In Figures 2-4, the user chooses whether they wish to have a mini bar, beach towels, cleaning services, personal care services, etc. Each option affects the overall impact of the user's stay and results in different accommodation costs (Figure 4).

The platform offers users the opportunity to tailor their stay according to their needs, while receiving information on the environmental footprint of each choice. At the beginning, each accommodation offers a basic option, as defined by the owner. The users can then add any additional facilities they wish, with the aim of optimising their stay while trying to reduce their environmental footprint. The system calculates the energy footprint of each option, providing the user with information on its impact on the environment.

The way the energy footprint is calculated based on the energy consumption of the appliances per use or per day and converted into CO2 equivalent kilograms. For example, if the user adds a hairdryer, the system calculates its consumption based on the average daily usage, number of people and days booked, converting the energy into CO2 equivalent kilograms. The same applies to other additions, such as a small refrigerator (mini bar), with the consumption of the appliance calculated based on average daily on/off usage.

Through this process, the platform provides the user with a full audit of their environmental footprint, encouraging them to make choices that reduce their impact on the environment. At the same time, through a reward system, the system offers rewards to users who prefer sustainable options, such as room upgrades or free breakfast, based on the reduction of CO2 emissions from their previous bookings. In addition, the information collected from users' choices forms the basis for regular data analyses.

The data analyses are made available to hotels and users who are members of the loyalty programme, providing information on their energy consumption and suggesting ways to optimise energy use. At the same time, the platform communicates with sensors in the hotel, collecting data on energy consumption and proposing optimisation solutions to make the accommodation more sustainable.

Through this approach, the platform encourages awareness and action in a more sustainable direction, both on the part of the users and the hosts themselves. This collaboration between the two parties is shaping a new dynamic in the hotel industry, where user choice is becoming more and more important, influencing the decisions of the accommodation and vice versa, promoting sustainability and the adoption of more environmentally friendly practices.

The existing accommodation booking platforms offer users basic predefined options depending on the type of accommodation, as shown in Figure 1. These options vary in terms of the amenities of each accommodation and usually correspond to different prices. For example, a guest can choose between a single or double room, with or without a view, and these options usually correspond to four different prices.

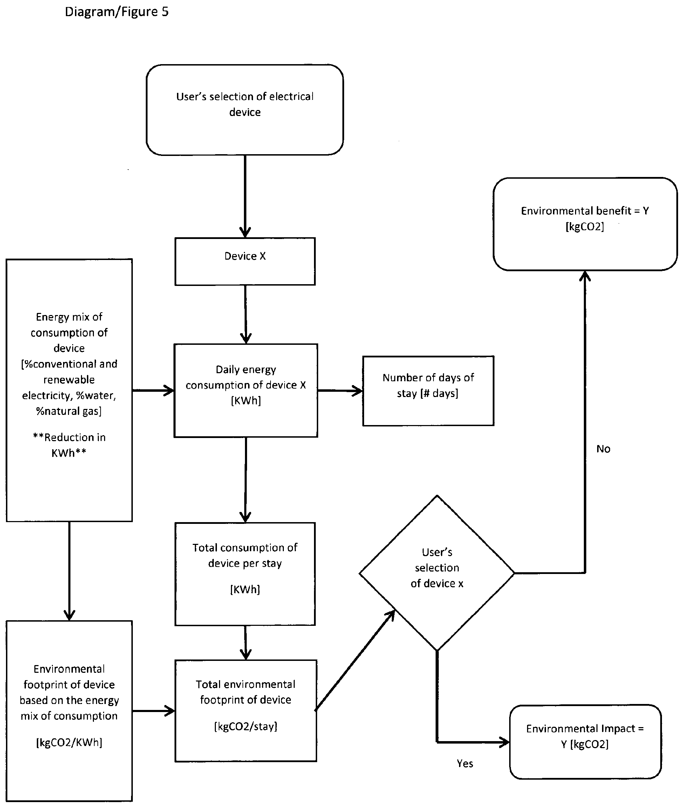

Under the current system, users either have no choice in terms of accommodation facilities or have a limited range of options to choose from. The main problem with the existing platforms is that the environmental impact of the user's stay is not taken into account, and there are also no incentives to choose more sustainable criteria. In contrast, Figure 5 analyses how the hotel contributes to the platform by providing important information on the energy mix and environmental footprint of the devices offered in the booking system. Specifically, the hotel enters the energy consumption of the appliances (in KWh) and their corresponding environmental footprint (in kgCO2/KWh) into the platform. The user, for their part, enters the number of days of their stay. Based on this number, the platform calculates the total potential energy consumption of the appliances during the stay. Subsequently, the total potential environmental footprint of the appliances (in CO2/stay) is calculated. Finally, the user can choose to add an appliance in addition to the basic package (as described in Figures 2-4), obtaining complete information on the environmental impact and the total environmental footprint of their stay. This approach enables the user to make more informed decisions about their stay and its environmental impact. Not only does the platform provide personalised options, but it also offers transparency and incentives to choose sustainable solutions, something that existing booking platforms do not offer.

The methodology of the platform according to the present invention with respect to the services selected by each user is slightly differentiated. In this case, the user chooses the form and frequency of the services they want and the platform calculates the direct and indirect impact of these services on the environment. For example, if the user chooses to modify the basic accommodation package at the existing hotel site that includes a daily change of bed linen and towels with a reduced schedule, the platform will know how many pollutants were saved by the process of changing towels and bed linen. It is worth mentioning that the methodology for calculating these consumption instances in an accommodation will be done by collecting the total consumption per use cycle of the service in question and reducing it to the consumption per unit use. This will directly inform the user of the impact of the choices made regarding the services of a room on the environment.

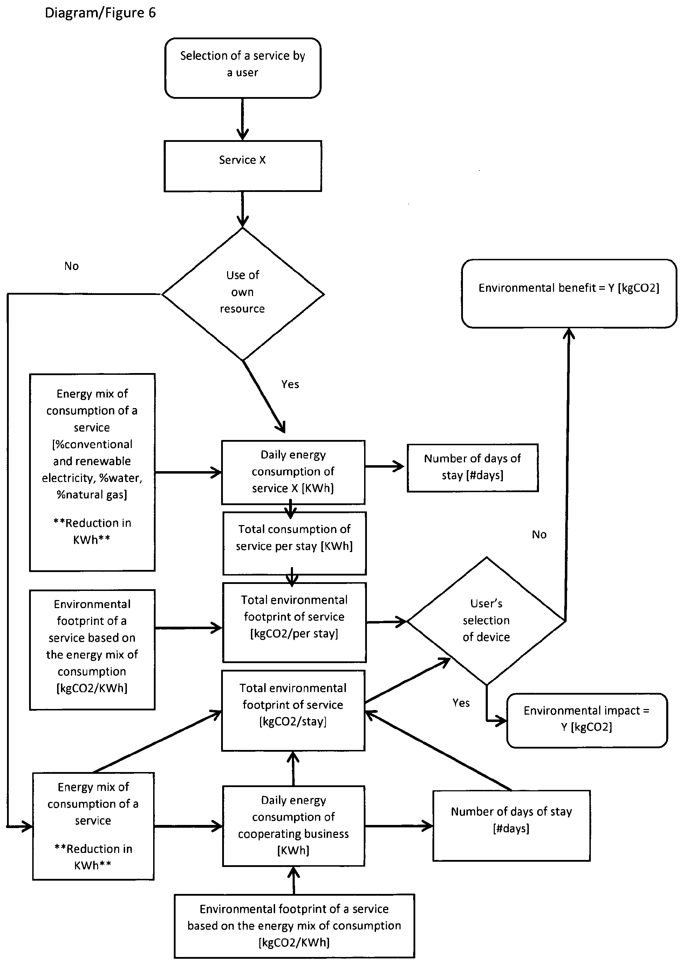

As explained diagrammatically in figure 6, the hotel enters into the platform the energy mix of the service consumption and the daily energy consumption of each service that will be present in the personalised reservation selection system [in KWh]. If the service is implemented through an external partner, these data are entered by the hotel after contacting the partner. In addition, the hotel enters the environmental footprint of each form of energy present in its energy mix [in kgCO2/KWh]. In turn, the user enters the number of days of stay in the system and in this way the total potential energy consumption of each service per stay is calculated. At the next stage, the total potential environmental footprint of each service per stay is calculated [in kgCO2/stay]. Finally, the user decides whether they want to choose each service in addition to the basic package for their stay and the frequency of this service (Figures 2- 4). The platform informs them of the environmental impact of each choice and of the total environmental footprint of their stay [in kgCO2].

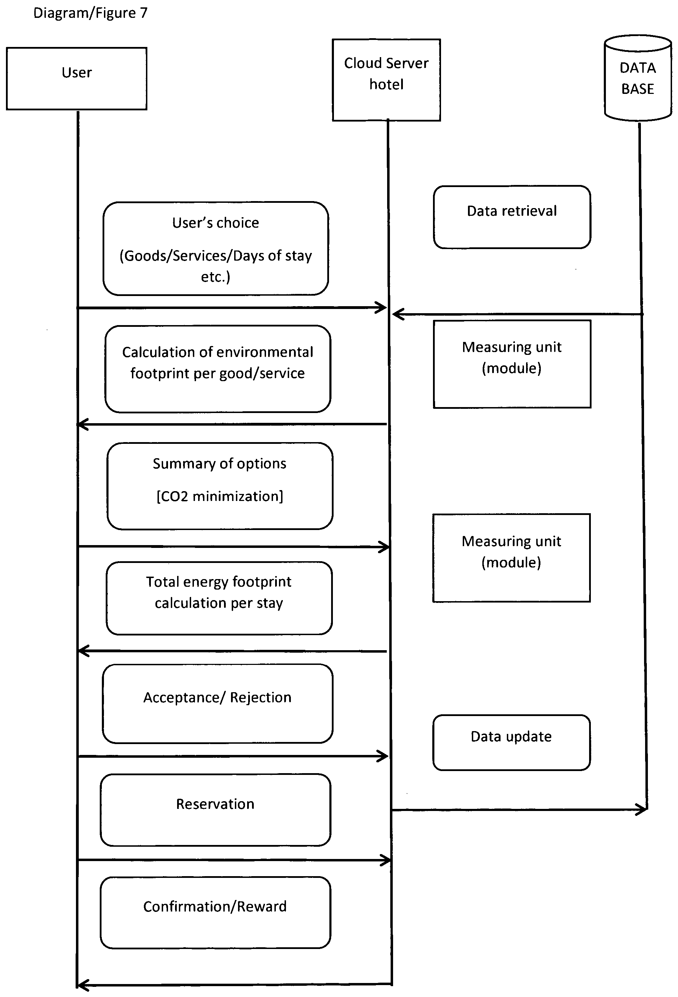

In summary, as shown in Figure 7, the hotel energy footprint calculation system is structured on the two-way data flow. As far as the inputs to the system are concerned, the user enters their accommodation options (services, goods, days of stay, etc.) and the hotel enters the energy mix (grid electricity, renewable energy, oil, gas, etc.) of each good/service as well as the conversion factor of each form of energy into an energy footprint [in kgCO2/KWh]. The collection of all the above data is necessary for the calculation of the user's energy footprint through the unit of measurement (module). By applying the unit of measurement, the user is informed of the energy impact of their choices and decides which goods/services to keep for their stay. If the user then proceeds to make a reservation, the platform asks the hotel manager to confirm it. The confirmation of the booking is arranged by the hotel operator, who then asks the customer to confirm the booking. The confirmation of the reservation is automatically accompanied by an update of the user for the details of their reservation and an update of the database for the needs of the platform's loyalty system.

The reward system implemented on the platform is an innovative approach that deserves special mention. Through this system, the platform encourages registered users to make sustainable choices during their bookings, offering them overall incentives and rewards. An important feature of this system is the automatic update of the database for each reservation by a registered user. In this way, the total amount of CO2 kilograms saved due to the user's sustainable choices during their stay is recorded. Depending on each user's total contribution to reducing the hotel industry's energy footprint, the platform offers different levels of rewards. Rewards can include room upgrades, free breakfast, access to rooms during high demand periods and more. The type and level of reward depends on each user's overall contribution to reducing their energy footprint. This creates a cycle of mutual encouragement to adopt sustainable practices during hotel stays.

Having adequately covered the reward scheme, it is worth pointing out that the energy efficiency of a site is something that has been the subject of research before, but has never been linked to the tourism sector and has so far never been linked to the possibility of personalising the booking. Our platform focuses on developing a system that calculates the environmental footprint of booking a room and reduces this footprint through a booking personalization system.

On the other hand, studying international bibliography, we identify patent WO2022093700A1 describing a system for calculating the carbon footprint, which includes a graphical user interface (GUI) with a screen, processor and memory. Instructions stored in memory, when executed by the processor, allow the system to receive travel itinerary data from the user via the GUI. The system then identifies and displays a list of amenities based on this data. The user selects a provider from the list and the system calculates and displays the value of the carbon footprint based on this selection. The travelling question may be about accommodation, transport or experiences. The carbon footprint value can be based on several factors, such as carbon emission data, travel dates and number of travelers.

The investigation of this patent reveals a number of positive features that make it particularly important and innovative in the field of hospitality and environmental footprint management. Let's take a closer look at the presentation of the patent, highlighting its advantages and innovations compared to WO2022093700A1.

### Wider applicability and adaptability

One of the main advantages of this patent is its flexibility and applicability to any hotel, regardless of size or category. This adaptability ensures that the platform can be adopted by a wide range of accommodations, from small boutique hotels to large luxury complexes. This flexibility allows for greater dissemination of sustainable practices and increased environmental awareness throughout the hospitality industry.

### Beneficial personalisation options

The ability to personalize the room's amenities is one of the most important features of the patent. Users can choose the additional amenities they want, such as energy-efficient appliances, organic personal hygiene products, and more. Each option is accompanied by environmental footprint information, allowing users to make informed decisions and control their environmental footprint.

### Reward system for Sustainable Choices

This patent includes an innovative reward system that motivates users to adopt sustainable practices during their stay. Users earn points for each sustainable choice they make, such as choosing not to change towels daily or using less water. These points can be redeemed on future bookings for offers such as room upgrades, free breakfast, and other amenities. This system not only boosts user engagement, but also promotes sustainable behavior in a direct and tangible way.

### Data Collection and Analysis

The platform collects data from users' choices, which is used to create data analytics. These analyses provide valuable insights to hotels about their guests' preferences and behaviours. Hotels can use this information to improve their practices and offer more sustainable choices to their guests. In addition, these analyses can help improve the energy efficiency of hotels, reducing their overall environmental footprint.

### An integrated approach to reducing the environmental footprint

Compared to patent WO2022093700A1, which focuses mainly on calculating the carbon footprint for predefined hotels and providers, this patent offers a more comprehensive approach. Not only does it provide the calculation of the environmental footprint of a room booking, but it also provides the ability to personalise room amenities and reward sustainable choices. This integrated approach enhances sustainability in the hospitality industry by promoting practices which reduce CO2 emissions and increase the environmental awareness of users.

### Complementarity and Collaboration with Other Technologies

Although the two patents are not directly comparable, they can work in a complementary way, offering integrated solutions to improve energy efficiency and reduce the environmental footprint in tourism. Integrating patent WO2022093700A1 for carbon footprint calculation with the personalization and reward system of this patent can create a more integrated and effective approach.

### Improved User Experience

Customized Proposals: The platform can customize its recommendations based on users' previous choices and preferences, providing personalized solutions that best meet their needs. This personalisation enhances user satisfaction and promotes continued use of the platform.

### Transparency and Education

By providing clear information on the environmental footprint of each option, the platform educates users about the environmental impact of their decisions. This transparency builds users' confidence and helps them understand the importance of sustainable practices.

### Environmental and Social Responsibility

Contributing to sustainability: By promoting sustainable practices, the platform contributes to reducing CO2 emissions and protecting the environment. Users who make sustainable choices reduce the overall environmental footprint of their travel.

Strengthening Corporate Social Responsibility (CSR): Hotels that adopt this platform can enhance their image as responsible corporate citizens. A commitment to sustainable practices can attract environmentally conscious customers and differentiate hotels from the competition.

### Financial Benefits

Cost reduction: Sustainable practices often lead to a reduction in operating costs. For example, saving energy and water reduces the respective costs, while reducing waste can lead to lower waste management costs.

Increase Customer Loyalty: The reward system enhances customer loyalty. Customers who receive rewards for their sustainable choices are more likely to return to the same hotel for future bookings, increasing repeat customers and revenue.

Technological Innovation and Continuous Improvement through Al and Machine Learning: the platform can integrate Al and machine learning technologies to continuously improve its recommendations and better analyze data. These technologies can provide more accurate predictions and personalised advice for users.

Interoperability with Other Platforms: The platform can integrate with other hotel management technologies and management systems (PMS), improving overall functionality and facilitating the adoption of sustainable practices.

### Enhance Social Awareness.

Community and Social Impact: The platform can create a community of environmentally conscious travellers who share their experiences and practices. This community can promote sustainable tourism development and positively influence the attitudes of other travellers.

Promotion of local products and services: Through the platform, hotels can promote local products and services that are more environmentally friendly. This not only reduces the carbon footprint of transport, but it also supports the local economy.

### Overall Environmental Management Strategy

Holistic Approach to Sustainability: The platform integrates various aspects of environmental management, from energy efficiency and water management, to waste reduction and supporting local biodiversity. This holistic approach ensures that all environmental issues are addressed systematically.

Staff training and awareness raising: The platform can also include training programs for hotel staff, enhancing the commitment of all employees to sustainable practices and ensuring effective implementation of initiatives.

In summary, this patent presents numerous positive elements that make it an innovative and comprehensive solution for reducing the environmental footprint in the hospitality industry. Its personalisation possibilities, reward system, data collection and analysis, and wider application to any hotel make it a powerful tool for promoting sustainable practices and raising environmental awareness.

### Conclusion

This patent stands out for its flexibility of application, personalization possibilities, reward system, and use of data analytics to improve hotel practices. These features make it an innovative and comprehensive solution for reducing the environmental footprint in the hospitality industry. The application of this patent can contribute significantly to the sustainable development of tourism by promoting environmentally friendly practices and enhancing the environmental awareness of users.

In summary, the main differences between the two patents are as follows:
1. **Scope of Application:** Patent WO2022093700A1 applies to predefined hotels and providers, whereas this patent can be applied to any hotel.
2. **Personalization:** This patent offers possibilities to personalize room amenities, allowing users to control and reduce their environmental footprint, which is not offered by patent WO2022093700A1.
3. **Reward system:** This patent incorporates a reward system that motivates and rewards users for their sustainable choices, creating additional incentives for ecologically responsible accommodation.

These differences make this patent more comprehensive and effective in reducing the environmental footprint and promoting sustainable practices in the hospitality industry. As the two methods address different sectors, they are not directly comparable.

Regarding the technical implementation of the platform, the platform is web-based and is programmed in php and javascript programming language. It is hosted on a Greek High Availability/Cloud Server with 40GB SSD storage, 6CPU cores processing power, 6GB memory and daily traffic up to 1250GB. It is compatible with version 8.2 of Php and communicates bidirectionally with a SQL database (Z3RO_ECO). In this database, the tables where the data and information of the platform will be stored have been created.

These tables and their basic properties are as follows:
- Z3RO_ECO_owners: storage/update of the fields (unique number) with the details of the hoteliers registered in the system and storage of the unique property number of each hotel - accommodation
- Z3RO_ECO_customers: storage/updating of the fields (unique number) with the details of the customers who have booked or registered in the system. Also updated is the number of reservations they have completed through the platform and the total number of CO2 saved through their reservations.
- Z3RO_ECO_hotels: storage/updating of the fields with the data related to the accommodation (e.g. unique property number, property name, environmental footprint of each form of energy, etc.)
- Z3RO_ECO_rooms types: store/update the fields (unique number) with the details of the bedrooms registered on the platform.
- Z3RO_ECO_extra_services: storage/updating of the fields with the details of the additional services that each room may have as registered in the platform.
- Z3RO_ECO_reservation: storage/update of the fields with the availability of the rooms as registered in the platform.
- Z3RO_ECO_ecomix: storage/updating of the fields containing the energy mix data of each good or service accompanying the stay.

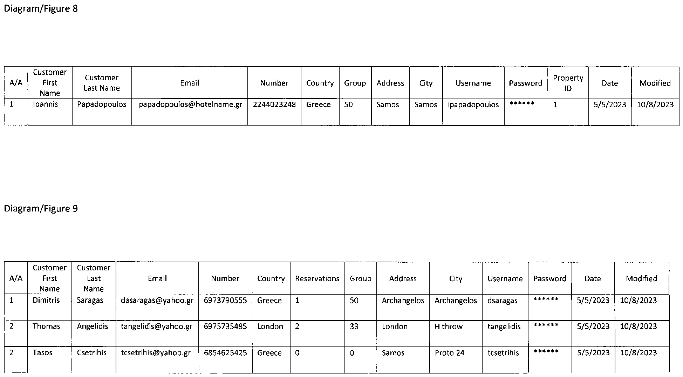

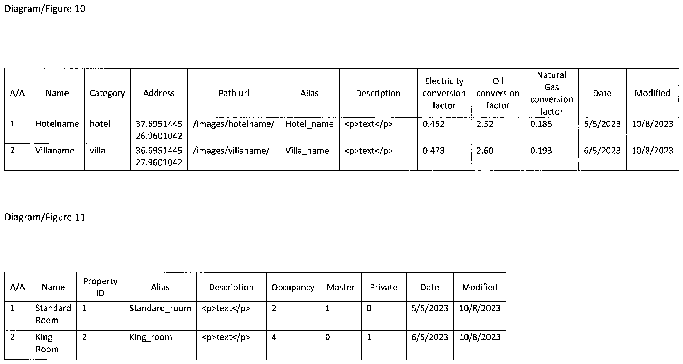

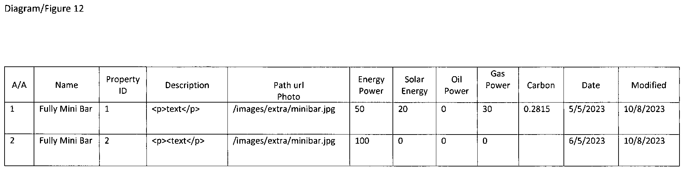

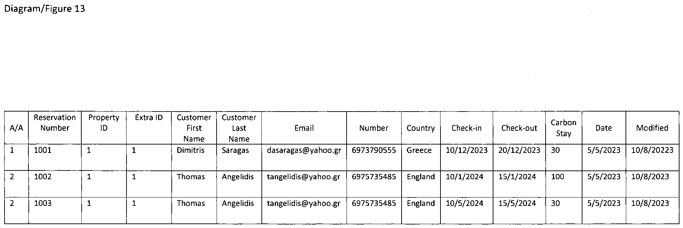

The fields of the aforementioned tables are shown in Figures 8-13. These are fields required to have all the necessary information from all parties involved. Indicatively, for users, the first name, last name, email, telephone number, country, address, password, user name, registration date and date of last modification are stored (Figure 9). For hotels, the fields of both the hotel address and the individual items and services to be personalised such as name, photo, type of service, date of registration are stored as illustrated in Figure 12.

In addition, a measurement module (ZERO MODULE) has been designed which calculates the energy footprints of each accommodation based on the data entered into the platform by the users and the data stored in the database.

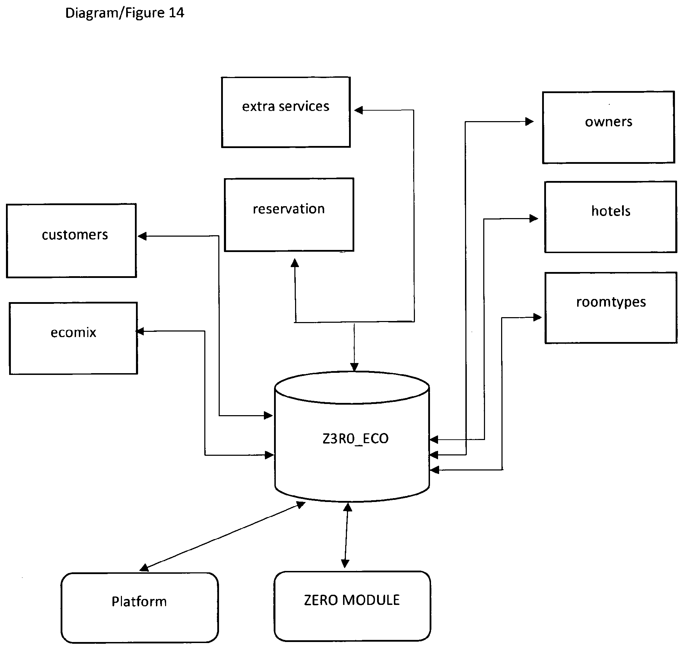

The platform, the database and the measurement module (module) are in constant communication exchanging and storing data to serve the seamless operation of the platform as shown diagrammatically in Figure 14. It is a two-way communication between the tables discussed above, the measurement module (module) and the platform that all together achieve the smooth operation of the platform.

## Claims

1. A system for calculating the energy footprint of a hotel unit based on the data entered into the cloud platform by users during two-way communication with the database to extract data stored in it, **characterized in that** this system includes a unit of measurement consisting of the platform and the database (Figure 7). The platform is responsible for calculating the energy footprint of each residence, using the data entered by the users and processed by the measurement module. The platform, the database and the measurement module are in constant communication, exchanging and storing data in order to ensure the smooth operation of the platform. The platform is hosted in a Greek environment, specifically in a High Availability/Cloud Server environment with 40GB SSD storage, 6 cores (PU cores), 6GB memory and up to 1250GB daily traffic (Figure 14). The choice of such an environment is aimed at providing a reliable and efficient service, ensuring that the platform can meet the needs of users at all times, providing stable and rapid access to data and computation. In addition, the platform is compatible with version 8.2 of the programming language PHR and communicates bidirectionally with the SQL database, known as Z3RO_ECO. This communication ensures that the data is synchronized and readily available for processing, allowing the immediate and accurate generation of the necessary calculations for the energy footprint of each residence.
The calculation of the hotel's energy footprint allows for the analysis and quantification of energy consumption based on user choices. In particular, the hotel enters detailed data on the energy consumption mix of each appliance on the platform. This includes the daily energy needs of each appliance in kilowatt hours (KW/h), as well as the environmental footprint of each form of energy that is part of the energy mix, expressed in kilograms of carbon dioxide per kilowatt hour (kgCO2/KW/h). The selection and accurate recording of these data is critical to the accuracy of the final calculations, as it provides a clear picture of the energy consumption and environmental impact of each appliance.
Users, for their part, enter the number of days they intend to stay at the hotel on the platform. This data, combined with the data provided by the hotel, allows the algorithm to calculate the total potential energy consumption of each device for the total stay. The calculation is done by multiplying the daily consumption of each appliance by the number of days of stay, which provides a clear estimate of the total consumption for each appliance. In a next step, the system uses this data to estimate the total potential environmental footprint of each appliance, expressed in kilograms of carbon dioxide per stay (kgCO2/stay). This estimate is achieved by applying the energy mix parameters to the total potential consumption, thus giving a complete picture of the environmental footprint.

2. A system for calculating the energy footprint of a hotel unit according to claim 1 wherein at the final stage of the process, the user is asked to decide which devices to use in addition to the basic accommodation package. The platform informs the user of the environmental impact of each choice by calculating and presenting the total environmental footprint of their stay in kilograms of carbon dioxide (kgCO2). This information is important as it enables users to make more conscious choices about the use of appliances during their stay, helping to reduce their personal energy footprint and promoting more sustainable practices. Through this process, the platform not only calculates the energy footprint, but also educates users in understanding and reducing the environmental impact of their choices.

3. A system for calculating the energy footprint of a hotel facility according to the choices of the guest and in accordance with claims 1 and 2, wherein the system also has a reward scheme, which provides additional benefits and incentives to both accommodation owners and guests. This reward scheme encourages user participation by providing incentives for users to choose more environmentally friendly options during their stay. These incentives may include discounts on future stays, free room upgrades or other benefits that will make their stay more enjoyable and at the same time more environmentally responsible.

4. A method to calculate the hotel's energy footprint for each user's choice, where the hotel enters into the platform the energy consumption mix of each appliance and the daily energy consumption of each appliance that will be present in the personalised reservation choice system (in KW/h). In addition, the hotel also enters the environmental footprint of each form of energy included in its energy mix (in kgCO2/KW/h).
For its part, the user enters into the system the number of days of stay and in this way the total potential energy consumption of each appliance per stay is calculated. Therefore, in the next step, the total potential environmental footprint of each appliance per stay is calculated (in kgCO2/stay). In the final step, the user decides whether they want to choose each appliance in addition to the basic package for their stay. Through the platform, the user is informed about the environmental impact of each choice and the total environmental footprint of their stay (in kgCO2). In this way, users make more informed choices about the use of devices during their stay, helping to reduce their environmental footprint.

5. A method for calculating the energy footprint of a hotel unit depending on the services chosen by each user, according to claim 4 wherein the user chooses the form and frequency of the services they want to use during their stay. The platform is designed to calculate the direct and indirect environmental impact of these services. The calculation methodology is based on collecting the total consumption of each service per use cycle and reducing this to the consumption per unit use. In this way, the user is directly informed of the environmental impact of their choices of room services. This process allows users to better understand how their choices affect the environment and to make more informed decisions about the use of the services offered in the hotel.
